# EUROPEAN PATENT SPECIFICATION

(11) **EP 1 876 351 B1**
(45) Date of publication and mention of the grant of the patent: **19.07.2017**
(21) Application number: 06730421.2
(22) Date of filing: 29.03.2006
(51) Int. Cl.: F03D 80/00, F03D 1/06

(54) **WINDMILL**
WINDMÜHLE
EOLIENNE

(30) Priority: 30.03.2005 JP 2005098138
(43) Date of publication of application: 09.01.2008
(73) Proprietor: Zephyr Corporation, Minato-ku, Tokyo 107-0052 (JP); TORAY INDUSTRIES, INC., Tokyo 103-8666 (JP)
(72) Inventor: ITO, Ryosuke, 1680065 (JP); KATAOKA, Atsushi, 5240021 (JP); NUDESHIMA, Hideki, 5200842 (JP); YOSHIDA, Takashi, 5200842 (JP)
(74) Representative: Kador & Partner
(86) International application number: PCT/JP2006/306473
(87) International publication number: WO 2006/106734

(56) References cited:
- EP-A1- 1 306 523
- DE-C1- 19 903 550
- JP-A- 53 060 405
- JP-A- 2000 352 398
- JP-A- 2002 201 909
- JP-A- 2004 245 174
- JP-A- 2004 316 466
- JP-B2- 06 035 279
- JP-U- 06 014 495
- JP-U- 57 031 579
- JP-Y2- 63 050 463
- US-A- 3 132 841
- US-A- 5 573 377

## Description

### Technical Field of the Invention

The present invention relates to a windmill, and specifically, to a connection structure between a hub of a windmill shaft and a blade root part.

### Background Art of the Invention

A plurality of blades, usually, about three blades, are provided to a windmill, and the root parts thereof are fixed and connected to a hub of a windmill shaft and the blades are rotated along with the rotation of the windmill shaft. In particular, in a small-sized windmill, a method for fixing blade root parts to a hub by fastening due to through bolts is simplest and well employed. Recently, in order to lighten in weight high-strength and high-rigidity blades, the blade body portions have been formed by employing a fiber reinforced plastic (hereinafter, also referred to as merely "FRP"), in particular, a carbon fiber reinforced plastic (hereinafter, also referred to as merely "CFRP") (for example, Patent document 1). Even in such an FRP blade, a blade fixing method due to the fastening using through bolts as described above is employed usually.

In the fixing method having bolt holes on the blade body and directly fastening the blade body using the bolts, however, a crack starting from the bolt hole generated with a stress concentration may be generated on the blade by the vibration or the centrifugal force generated by the rotation of the windmill, regardless of the bolt fastening force, and a deterioration of an internal material may occur ascribed to penetration of water into the blade.

Further, in a case where bolt holes are provided on the blade body, it may be necessary to specially insert a solid member into the fastening portion in order to maintain the form and the strength of the bolt hole portion, and in such a case, the weight of the blade may inevitably increase, and the above-described lightening advantage in weight may be damaged. Moreover, the increase in weight of the blade causes an increase of the moment of inertia of the blade and an increase of the kinetic energy of the blade itself, and consequently, causes a cost up of other portions due to improvement of a braking performance, increase of motor capacity and weight, reinforcement of a supporting arm, etc. In addition, the increase of the kinetic energy of the blade may increase a damage to the surroundings if the blade would be broken and scattered.

Furthermore, because the fastening using bolts requires an installation accuracy, for example, in a case of a small-sized windmill which is frequently built by an individual at a high place of his own house and the like or at a hut in a mountain area and the like, the fastening is likely to cause a vibration. One known arrangement is disclosed by JP-A-2000-120524. Another arrangement for attaching a blade with an undercut fixing structure is disclosed in DE 199 03 550.

### Disclosure of the Invention

### Problems to be solved by the Invention

Accordingly, paying attention to the above-described present circumstances, an object of the present invention is to provide a windmill having a connection structure between a blade and a hub basically without requiring a bolt fastening structure, thereby achieving lightening in weight of the blade and easily ensuring the strength, rigidity and installation accuracy of this connection portion.

### Means for solving the Problems

To achieve the above-described object, a windmill according to the present invention is characterized by connecting a blade root part to a hub in a radial direction of a windmill shaft by an undercut fitting structure. This undercut fitting structure means a structure, for example, wherein a blade root part has a form in which its width is once decreased as approached to a windmill shaft in the radial direction of the windmill shaft and thereafter the width is increased, and on the other hand, a notch portion or a space portion capable of fitting the blade root part is formed on the hub side, and by this fitting, the structure can engage the width increased portion formed on the blade root part against the radially outward direction of the windmill shaft, namely, can perform an undercut function for preventing the blade root part from coming off in the radially outward direction of the windmill shaft.

In this windmill according to the present invention, it is preferred that, with respect to sections in a direction perpendicular to the radial direction of the windmill shaft in the blade root part forming the undercut fitting structure, a section having a sectional area in a range of 1.1 to 2.0 times a minimum sectional area is disposed at a position closer to the windmill shaft than a section having the minimum sectional area. Further, it is preferred that a gap between the hub and the blade root part in the undercut fitting structure is in a range of 0 to 0.5 mm.

Further, in the windmill according to the present invention, it is preferred that a portion of the undercut fitting structure is fixed to a positioning surface of the hub in an axial direction of the windmill shaft by a pressing means. Namely, the undercut fitting structure portion is structured so as to be fixed at a predetermined position in the axial direction of the windmill shaft by the contact between the positioning surface of the hub and the pressing means, and fixed in the radial direction of the windmill shaft by the undercut fitting structure. In both directions, the blade root part is fixed without requiring fastening by bolts. It is preferred that at least one of surfaces for fixing of the positioning surface and the pressing means is formed as a surface perpendicular to the axial direction of the windmill shaft.

In such a structure, it is preferred that the undercut fitting structure is formed on each of surfaces for fixing of the positioning surface and the pressing means. Further, it is also preferred that the hub and the blade root part come into contact with each other at a flat surface or a surface having a radius of curvature within a range of 5 to 100 mm in a portion of the undercut fitting structure forming a part of the positioning surface of the hub.

Further, in the windmill according to the present invention, a structure can be employed wherein a plurality of blade root parts are connected to a single hub. Further, it is preferred that a plurality of blade root parts are connected to the hub so as to be disposed equally spaced in angle in a circumferential direction around a rotational axis of the windmill shaft.

Further, in the above-described structure having the pressing means, it becomes possible to easily fix all the blades simultaneously with only one pressing means, by a structure wherein a single fixing means simultaneously fixes undercut fitting structure portions of a plurality of blades. In such a structure; the easiness and accuracy of installation can be easily ensured.

Further, in the windmill according to the present invention, it is preferred that a blade body part forming a part of the blade root part is formed using a fiber reinforced plastic, from the viewpoint of lightening in weight. In particular, it is preferred that the fiber reinforced plastic comprises a carbon fiber reinforced plastic. In this case, it is preferred that the apparent density of the blade body part is in a range of 0.2 to 1.0 g/cm³.

In the case where the blade body part is formed using a fiber reinforced plastic, a structure can be employed wherein the portion of the undercut fitting structure formed on the blade root part is covered with a metal frame material. In particular, as described above, in the case where the portion of the undercut fitting structure is fixed to the surface for fixing of the hub in the axial direction of the windmill shaft by the pressing means, because this surface for fixing becomes a contact surface and higher surface strength and accuracy are required, such a structure covered with a metal frame material is preferred. As the metal frame material, also in consideration of lightening in weight, an aluminum frame material (including an aluminum alloy frame material) is preferable. These undercut fitting structure portion of the blade body part and the metal frame material, for example, may be bonded by an adhesive. The thickness of the layer of the adhesive between the blade body part and the metal frame material forming the portion of the undercut fitting structure is preferably in a range of 0.05 to 0.5 mm.

Further, in the above-described structure having the metal frame material, it is preferred that the blade body part and the metal frame material forming the portion of the undercut fitting structure are connected to each other by the undercut fitting structure. Further, the metal frame material may be divided into a plurality of parts. The metal frame material may be divided into a plurality of parts at positions except the portion of the undercut fitting structure. Furthermore, a structure may also be employed wherein the undercut fitting structure is formed via a contact between the hub and the metal frame material.

Further, in the windmill according to the present invention, a structure can be employed wherein a strip having a flexibility for restricting a displacement of a blade relative to the hub when the fixing of the blade to the hub is released is provided at a connecting portion of the blade root part to the hub.

Namely, in addition to the connection due to the undercut fitting structure according to the present invention, the above-described structure is formed for restricting a displacement of a blade relative to the hub by the strip having a flexibility when the fixing of the blade to the hub is released. Basically, this structure is employed so that, during the time of a normal operation (during the time of a normal rotation of the blade), a force for restricting the blade substantially is not applied to the strip (a force is not applied to the strip), and when the fixing of the blade is released by a fatigue failure of the connecting portion and the like, the blade is restricted by the strip so as not to be left from the hub at a certain distance or more, and the blade is prevented from being scattered. Therefore, a fatigue does not occur in the strip itself, and when the strip is functioned to prevent the blade from being scattered, the strip itself can surely exhibit an expected strength, etc., thereby surely achieving the prevention of blade scattering.

The tensile strength of the above-described strip is preferably in a range of 1.5 to 5.0 GPa, and the tensile breaking strain of the strip is preferably in a range of 3 to 15%. By such a structure, the scattering of the blade can be properly prevented.

Further, it is preferred that a tensile stress generated in the strip is 1% or less of a tensile strength of the strip when the windmill operates in a rated range of use. Namely, it is preferred that, as described above, during the time of a normal rotation, the blade is maintained to be connected to the blade at a condition where the strip is deflected so that a tensile load almost is not applied to the strip or at a condition where a surplus is given to the strip utilizing the flexibility of the strip, and only when it is required to prevent the blade from being scattered, the tensile load is applied to the strip for restricting the blade.

Various embodiments can be employed as the connection structure of the strip to the blade root part. For example, a structure can be employed wherein a part of the strip is placed in a part of the blade. Further, a structure can also be employed wherein a part of the strip is tied to a part of the blade. Furthermore, together with these structures, an adhesive may be used for bonding.

The above-described strip is not particularly limited, as long as a tensile strength enough to prevent the scattering of the blade and a flexibility enough to achieve a connection structure to the blade, in which a force almost does not act on the strip at the time of a normal operation, are given to the strip. A desirable material for the strip comprises, for example, at least one kind of glass fibers, aramide fibers and a steel wire material.

Further, with respect to the connection structure between the strip and the blade root part, either a structure wherein a single strip restricts one blade, or a structure wherein a plurality of blades are restricted in displacement by using substantially a single strip, can be employed.

Although the type of the windmill according to the present invention is not particularly limited, the present invention is suitable, in particular, to a horizontal shaft type windmill whose windmill shaft extends in a horizontal direction.

In the above-described windmill according to the present invention, the blade acted with a centrifugal force in the radial direction of the windmill shaft by its rotation is connected to the hub by the undercut fitting structure at the root part thereof. In the axial direction of the windmill shaft, by fixing the portion of the undercut fitting structure to the surface for positioning of the hub in the axial direction of the windmill shaft by the pressing means, a desired fixing at a predetermined position can be easily achieved. Therefore, the blade root part basically does not at all require a bolt fastening structure as in the conventional structures, and bolt holes are also unnecessary.

### Effect according to the Invention

Thus, in the windmill according to the present invention, the connection and the fixing between the blade and the hub can be achieved without using the bolt fastening structure directly to the blade body, the problems of occurrence of fatigue and cracks on the blade accompanying with the bolt fastening can be solved, facilitation and improvement of accuracy for installation can be achieved, and further, by making the processing of bolt holes unnecessary and simplifying the forms of the blade and hub portions, the manufacture may be facilitated and the cost therefor may be reduced.

Further, by making the blade body part with an FRP, while the weight of the blade can be reduced, the strength, the rigidity and the accuracy in installation of the connecting portion to the hub can be easily ensured by the undercut fitting structure. Further, because bolt holes of the FRP blade body part can be made unnecessary, penetration of water into the blade can be easily prevented, and the weather resistance and the like may be improved. Furthermore, because the form is simple, the molding of the blade can be facilitated.

In particular, in a case of an FRP blade, since a structure for making the inside of the blade body hollow or for interposing a very light core material therein can be employed, it becomes possible to further accelerate the lightening in weight of the blade.

### Brief explanation of the drawings

[Fig. 1] Fig. 1 is a plan view of a blade portion of a windmill according to an embodiment of the present invention.
[Fig. 2] Fig. 2 is an enlarged plan view of the connecting portion between a blade root part and a hub of the windmill depicted in Fig. 1.
[Fig. 3] Fig. 3 is a sectional view of a portion of an undercut fitting structure formed on the blade root part, as viewed along A-A line of Fig. 2.
[Fig. 4] Fig. 4 is a sectional view of a portion of an undercut fitting structure, showing an example different from the structure depicted in Fig. 3.
[Fig. 5] Fig. 5 is a partial sectional view of a portion of an undercut fitting structure, as viewed along B-B line of Fig. 2.
[Fig. 6] Fig. 6 is a partial sectional view of a portion of an undercut fitting structure, showing another example different from the structure depicted in Fig. 5.
[Fig. 7] Fig. 7 is a partial sectional view of a portion of an undercut fitting structure, showing a further example different from the structure depicted in Fig. 5.
[Fig. 8] Fig. 8 is a partial sectional view, showing an example of a portion of an undercut fitting structure, as viewed along A-A line or C-C line of Fig. 2.
[Fig. 9] Fig. 9 is an enlarged partial plan view, showing an example in a case of adding a strip to the windmill depicted in Fig. 1.
[Fig. 10] Fig. 10 is an enlarged partial plan view, showing another example in a case of adding a strip to the windmill depicted in Fig. 1.

### Explanation of symbols

1: windmill
2: windmill shaft
3, 18: hub
4: blade
4a: blade body part
5: undercut fitting structure portion
6, 12, 14, 20: undercut fitting structure part formed on blade root part
7, 13, 15, 19: fitting hole portion
7a: positioning surface of fitting hole portion
8: aluminum frame material
9: CFRP surface material
10: acrylic low-density foamed material as core material
11, 21: pressing plate as pressing means
11a: pressing surface of pressing plate
16: surplus space
17: insert member
19a, 20a: taper surface
31, 32: strip

### The Best mode for carrying out the Invention

Hereinafter, desirable embodiments of the present invention will be explained referring to figures.

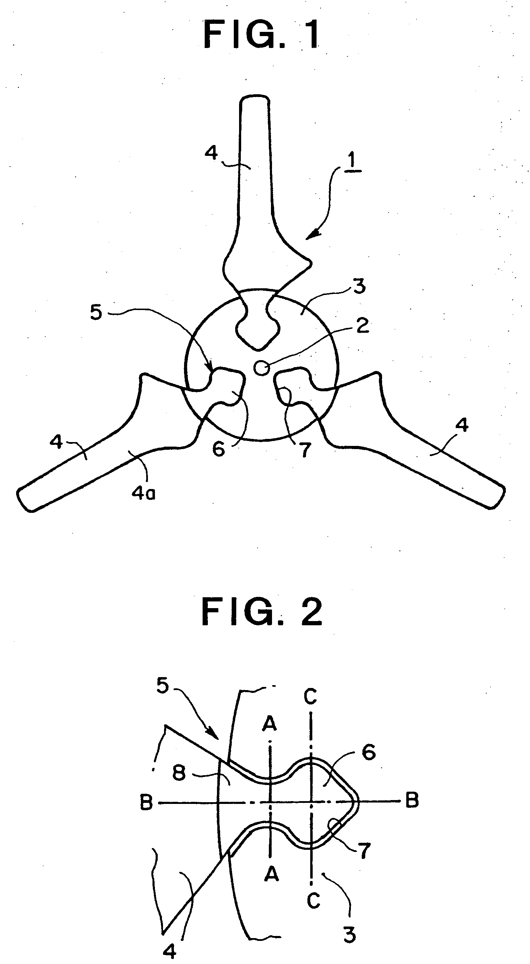

Figs. 1 and 2 show a windmill according to an embodiment of the present invention, and in particular, show an example of a case where a blade body part is made from an FRP. Although the FRP used for a blade of a windmill according to the present invention is not particularly limited, as the reinforcing fibers, for example, inorganic fibers such as carbon fibers or glass fibers and organic fibers such as Kevler fibers, polyethylene fibers or polyamide fibers can be exemplified. In particular, carbon fibers are preferred from the viewpoint of easiness of control of the strength and rigidity of a blade. As the matrix resin of the FRP, for example, a thermosetting resin such as an epoxy resin, an unsaturated polyester resin, a vinylester resin or a phenolic resin can be exemplified, and further, a thermoplastic resin such as a polyamide resin, a polyolefin resin, a dicyclopentadiene resin or a polyurethane resin can also be used. Further, as the structure of the FRP blade body part, both of a structure wherein only the outer shell (only the surface material) is made from an FRP and the inside is formed to be hollow and a structure wherein a light core material is interposed or charged in the inside of the FRP outer shell, a so-called sandwich structure, can be employed. As the core material, an elastic material, a foamed material or a honeycomb material can be used, and in particular, a foamed material is preferred for lightening in weight. The material for the foamed material is not particularly limited, and for example, a low-density foamed material of a polymer such as a polyurethane, a polystyrene, a polyimide, a vinyl chloride or a phenol and the like can be used. The honeycomb material is not particularly limited, and for example, an aluminum alloy, a paper, an aramide paper, etc. can be used as the material.

Fig. 1 depicts a plan view of a blade portion of a horizontal shaft type windmill, and in Fig. 1, symbol 1 shows the whole of the windmill. Windmill 1 has a windmill shaft 2 as the rotational shaft, and a hub 3 rotated integrally with the windmill shaft 2 is provided around the windmill shaft 2. In this embodiment, three blades 4 are connected to this hub 3 at their root parts. A body part 4a of each blade 4 is formed by using an FRP, particularly, a CFRP, and hub 3 and each blade root part are connected to each other in the radial direction of windmill shaft 2 by an undercut fitting structure.

The portion 5 of this undercut fitting structure comprises an undercut fitting structure part 6 formed on the blade root part, and an fitting hole portion 7 formed on the side of hub 3 and fitted with the undercut fitting structure part 6 formed on the side of blade 4, thereby engaging the undercut fitting structure part 6 against the radially outward direction of windmill shaft 2. In more detail, as shown also in Fig. 2, undercut fitting structure part 6 formed on the blade root part is formed as a shape in which its width observed as a plan view is once decreased as approached to windmill shaft 2 and thereafter the width is increased, and fitting hole portion 7 is formed as a plan shape along the plan shape of this undercut fitting structure part 6 so that the undercut fitting structure part 6 can be fitted with a small clearance (preferably, with a gap in a range of 0 to 0.5 mm).

In this embodiment, undercut fitting structure part 6 formed on the blade root part is covered with a metal, in particular, an aluminum frame material 8.

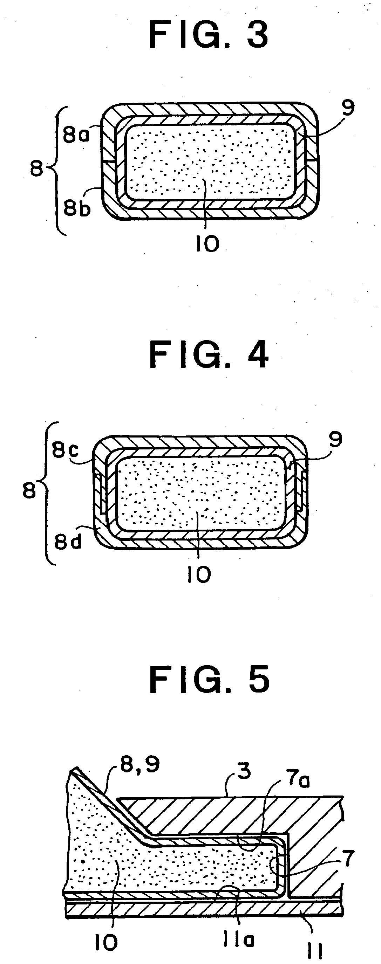

The structure of the section along A-A line in Fig. 2 is formed, for example, as shown in Fig. 3 or 4. Where, with respect to sections in a direction perpendicular to the radial direction of the windmill shaft in the blade root part forming the undercut fitting structure, a section having a sectional area in a range of 1.1 to 2.0 times a minimum sectional area is disposed at a position closer to the windmill shaft than a section having the minimum sectional area. In the structure shown in Fig. 3, the blade body part comprises a CFRP surface material 9 and an acrylic low-density foamed material 10 disposed in the surface material as a core material, and the CFRP blade body part is covered with an aluminum frame material 8. Aluminum frame material 8 comprises two members 8a and 8b, both members cover the CFRP blade body part at a condition where the C-shaped tip portions of both members are abutted to each other, and they are bonded to surface material 9 by an adhesive. In the structure of the blade body part shown in Fig. 4, aluminum frame material 8 covers the CFRP blade body part at a condition where the C-shaped tip portions of two members 8c and 8d are formed as stepped shapes and the tip portions are overlapped with each other, and they are bonded to surface material 9 by an adhesive. By overlapping the stepped-shape portions with each other, a positional shift between both members 8c and 8d can be prevented.

The structure of the section along B-B line in Fig. 2 is formed, for example, as shown in Figs. 5, 6 or 7. In the structure shown in Fig. 5, one surface 7a of fitting hole portion 7 of hub 3 is formed as a positioning surface, and by pressing undercut fitting structure part 6 formed on the blade root part onto this positioning surface 7a by a pressing plate 11 provided as a pressing means, the undercut fitting structure part 6 is positioned and fixed in the axial direction of the windmill shaft. In this embodiment, the positioning surface 7a of fitting hole portion 7 and a pressing surface 11 a of pressing plate 11 are both formed as surfaces perpendicular to the axial direction of the windmill shaft, blade 4 can be positioned and fixed easily at a predetermined position in the axial direction, and three blades 4 can be fixed simultaneously by a single pressing plate 11.

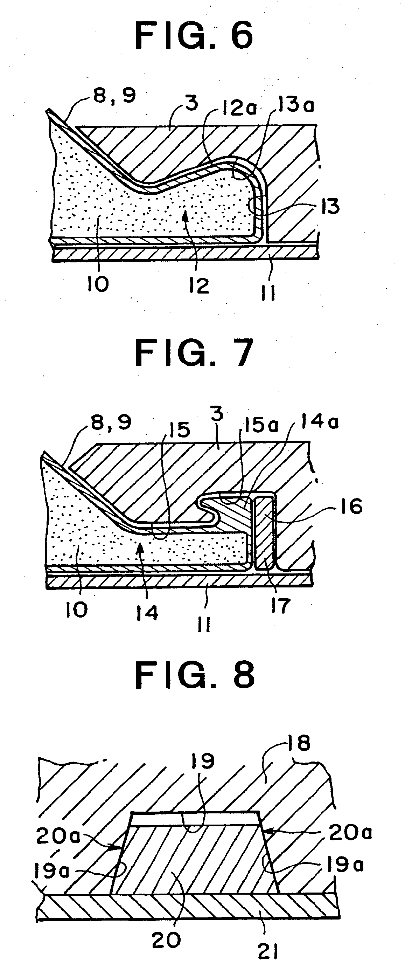

In the structure shown in Fig. 6, undercut fitting structure part 12 formed on the blade root part and fitting hole portion 13 of hub 3 are formed as an undercut fitting structure so that they can exhibit an engaging function also in the axial direction of the windmill shaft against the radially outward direction of the windmill shaft as well as an engaging function exhibited by the undercut fitting structure in the plan view direction shown in Fig. 2. Namely, the thickness of undercut fitting structure part 12 is once decreased as approached to the windmill shaft and thereafter the width is increased, and at the same time, the depth of fitting hole portion 13 in the axial direction of the windmill shaft is set as a shape corresponding to the shape in the thickness direction of the undercut fitting structure part 12. In other words, a convex surface 12a of undercut fitting structure part 12 is engaged with a concave surface 13a of fitting hole portion 13 in the axial direction of the windmill shaft. In this case, although only pressing surface 11a of pressing plate 11 is formed as a surface perpendicular to the axial direction of the windmill shaft, even in this structure, three blades 4 can be fixed simultaneously by a single pressing plate 11. As compared with the structure shown in Fig. 5, a force for engaging and connecting (restricting) blade 4 to hub 3 is great, relatively to a centrifugal force applied to the blade 4.

In the structure shown in Fig. 7, undercut fitting structure part 14 formed on the blade root part and fitting hole portion 15 of hub 3 are formed as an undercut fitting structure so that they can exhibit an engaging function also in the axial direction of the windmill shaft against the radially outward direction of the windmill shaft as well as an engaging function exhibited by the undercut fitting structure in the plan view direction shown in Fig. 2. Namely, a hook-shaped engaging portion 14a is provided on the side of one surface of the inserted tip portion of undercut fitting structure part 14 formed on the blade root part, and also on the deep inside portion of fitting hole portion 15, a hook-shaped concave portion 15a having a shape corresponding to the shape of hook-shaped engaging portion 14a is formed. Further, in the deepest portion of hook-shaped concave portion 15a, a surplus space 16 is formed for inserting hook-shaped engaging portion 14a into hook-shaped concave portion 15a, and in order to prevent occurrence of a rattle after insertion, an insert member 17 is inserted into this surplus space 16. After insertion of insert member 17, blade 4 may be fixed by pressing plate 11. Even in this case, three blades 4 can be fixed simultaneously by a single pressing plate 11.

Further, as the structures of the sections along A-A line and C-C line in Fig. 2, the outer shapes of undercut fitting structure parts shown in Figs. 3 and 4 may be employed, and a tapered outer shape (taper fitting structure) may also be employed, for example, as shown in Fig. 8. In the structure shown in Fig. 8, side surfaces 19a of fitting hole portion 19 of hub 18 are formed as taper surfaces, and side surfaces 20a of undercut fitting structure part 20 are formed as taper surfaces corresponding to the tapered side surfaces 19a. In such a structure, when each blade is pressed by pressing plate 21, even if a slight dimensional error exists in the fitting portion, it may be absorbed by a fitting structure by biting of taper surfaces to each other.

Thus, various structures can be employed as the portion of the undercut fitting structure and the pressing structure by the pressing means. In any structure, the bolt fastening structure employed in the conventional technology is not necessary for the connection between the blade root part and the hub, the problems of occurrence of fatigue and cracks on the blade accompanying with the bolt fastening can be solved, and facilitation and improvement of accuracy for installation can be achieved. By making the processing of bolt holes unnecessary, the manufacture may be facilitated and the cost therefor may be reduced by simplifying the forms of the blade and hub portions, and penetration of water into the blade can be easily prevented and the weather resistance and the like may be improved.

Further, by making the blade body part with an FRP, particularly with a CFRP, while the weight of the blade can be reduced, the strength, the rigidity and the accuracy in installation of the connecting portion to the hub can be easily ensured.

Furthermore, in the present invention, in addition to the above-described undercut fitting structure, a structure can be added wherein a strip having a flexibility for restricting a displacement of a blade relative to the hub when the fixing of the blade to the hub is released is provided at a connecting portion of the blade root part to the hub.

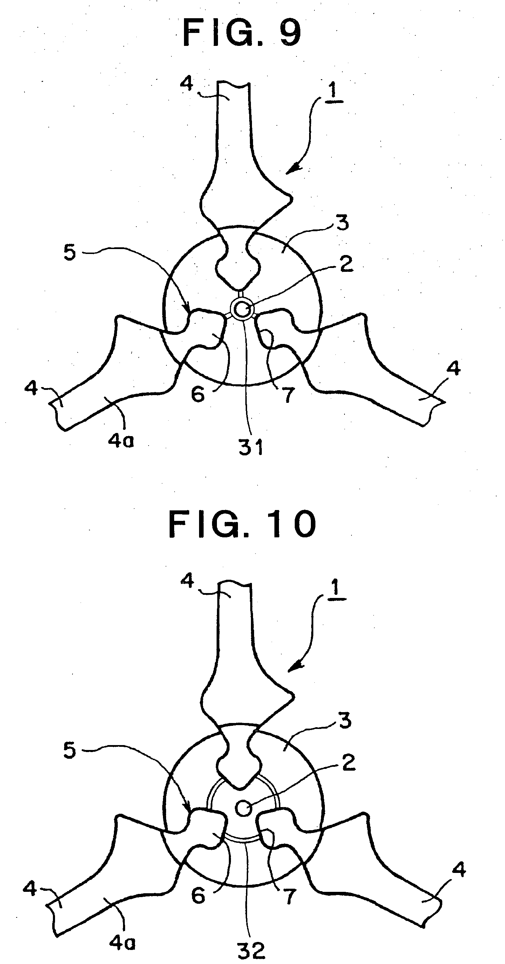

For example, as shown in Fig. 9, a structure can be employed wherein a strip 31 is provided around windmill shaft 2, as needed, via a spacer (not shown), and therefrom the strip 31 is connected to the root parts of respective blades 4. Further, as shown in Fig. 10, a structure can also be employed wherein a strip 32 is provided around windmill shaft 2 so as to extend at a position apart from the windmill shaft 2, and the strip 32 is connected to the root parts of respective blades 4 by placing the strip 32 in the root parts of the respective blades 4. In any case, basically, during the time of a normal operation (during the time of a normal rotation of the blades), a force for restricting blades 4 substantially is not applied to strip 31 or 32 (a force is not applied to the strip), and when the fixing of a blade 4 is released by a fatigue failure of the connecting portion and the like, the blade 4 is restricted by the strip 31 or 32 so as not to be left from hub 3 at a certain distance or more, and the blade is prevented from being scattered.

As aforementioned, the tensile strength of the above-described strip 31 or 32 is preferably in a range of 1.5 to 5.0 GPa, and the tensile breaking strain is preferably in a range of 3 to 15%. Further, it is preferred that a tensile stress generated in the above-described strip 31 or 32 is 1% or less of a tensile strength of the strip when the windmill operates in a rated range of use. Furthermore, a desirable material for the above-described strip 31 or 32 comprises, for example, at least one kind of glass fibers, aramide fibers and a steel wire material.

### Industrial Applications of the Invention

The present invention can be applied to any windmill, and in particular, the present invention is suitable for a small-sized windmill, a windmill having FRP blades and a horizontal shaft type windmill.

## Claims

1. A windmill (1) having a blade root part connected to a hub (3, 18) in a radial direction of a windmill shaft (2) by an undercut fitting structure (6, 12, 14, 20) of the blade root part, **characterized in that** a portion (5) of said undercut fitting structure (6, 12, 14, 20) is fixed to a positioning surface (7a) of said hub (3, 18) in an axial direction of said windmill shaft (2) by a pressing plate (11, 21).

2. The windmill (1) according to claim 1, wherein, with respect to sections in a direction perpendicular to said radial direction of said windmill shaft (2) in said blade root part forming said undercut fitting structure (6, 12, 14, 20), a section having a sectional area in a range of 1.1 to 2.0 times a minimum sectional area is disposed at a position closer to said windmill shaft (2) than a section having said minimum sectional area.

3. The windmill (1) according to claim 1 or 2, wherein a gap between said hub (3, 18) and said blade root part in said undercut fitting structure (6, 12, 14, 20) is in a range of 0 to 0.5 mm.

4. The windmill (1) according to claim 1, wherein at least one of surfaces for fixing of said positioning surface (7a) and said pressing plate (11, 21) is formed as a surface perpendicular to said axial direction of said windmill shaft (2).

5. The windmill (1) according to any of claims 1 to 4, wherein said undercut fitting structure (6, 12, 14, 20) is formed on each of surfaces for fixing of said positioning surface (7a) and said pressing plate (11,21).

6. The windmill (1) according to any of claims 1 to 5, wherein said hub (3, 18) and said blade root part come into contact with each other at a flat surface or a surface having a radius of curvature within a range of 5 to 100 mm in a portion (5) of said undercut fitting structure (6, 12, 14, 20) forming a part of said positioning surface (7a) of said hub (3, 18).

7. The windmill (1) according to any of claims 1 to 6, wherein a plurality of blade root parts are connected to a single hub (3, 18).

8. The windmill (1) according to any of claims 1 to 7, wherein a plurality of blade root parts are connected to said hub (3, 18) so as to be disposed equally spaced in angle in a circumferential direction around a rotational axis of said windmill shaft (2).

9. The windmill (1) according to any of claims 1 to 8, wherein a pressing plate (11, 21) simultaneously fixes undercut fitting structure portions (5) of a plurality of blades.

10. The windmill (1) according to any of claims 1 to 9, wherein a blade body part forming a part of said blade root part is formed using a fiber reinforced plastic.

11. The windmill (1) according to claim 10, wherein said fiber reinforced plastic comprises a carbon fiber reinforced plastic.

12. The windmill (1) according to claim 10 or 11, wherein an apparent density of said blade body part is in a range of 0.2 to 1.0 g/cm³.

13. The windmill (1) according to any of claims 10 to 12, wherein a portion of said blade body part positioned in a portion (5) of said undercut fitting structure (6, 12, 14, 20) formed on said blade root part is covered with a metal frame material.

14. The windmill (1) according to claim 13, wherein said metal frame material is an aluminum frame material (8).

15. The windmill (1) according to claim 13 or 14, wherein said blade body part and said metal frame material forming said portion (5) of said undercut fitting structure (6, 12, 14, 20) are bonded by an adhesive.

16. The windmill (1) according to claim 15, wherein a thickness of a layer of said adhesive between said blade body part and said metal frame material forming said portion (5) of said undercut fitting structure (6, 12, 14, 20) is in a range of 0.05 to 0.5 mm.

17. The windmill (1) according to any of claims 13 to 16, wherein said blade body part and said metal frame material forming said portion (5) of said undercut fitting structure (6, 12, 14, 20) are connected to each other by said undercut fitting structure (6, 12, 14, 20).

18. The windmill (1) according to any of claims 13 to 17, wherein said metal frame material is divided into a plurality of parts.

19. The windmill (1) according to any of claims 13 to 18, wherein said undercut fitting structure (6, 12, 14, 20) is formed via a contact between said hub (3, 18) and said metal frame material.

20. The windmill (1) according to any of claims 1 to 19, wherein a strip (31,32) having a flexibility for restricting a displacement of a blade (4) relative to said hub (3, 18) when the fixing of said blade (4) to said hub (3, 18) is released is provided at a connecting portion of said blade root part to said hub (3, 18).

21. The windmill (1) according to claim 20, wherein a tensile strength of said strip (31, 32) is in a range of 1.5 to 5.0 GPa, and a tensile breaking strain of said strip (31, 32) is in a range of 3 to 15%.

22. The windmill (1) according to claim 20 or 21, wherein a tensile stress generated in said strip(31, 32) is 1 % or less of a tensile strength of said strip (31, 32) when said windmill (1) operates in a rated range of use.

23. The windmill (1) according to any of claims 20 to 22, wherein a part of said strip (31, 32) is placed in a part of said blade root part.

24. The windmill (1) according to any of claims 20 to 23, wherein said strip (31, 32) comprises at least one kind of glass fibers, aramide fibers and a steel wire material.

25. The windmill (1) according to any of claims 20 to 24, wherein a plurality of blades (4) are restricted in displacement by using substantially a single strip (31, 32).

26. The windmill (1) according to any of claims 1 to 25, wherein said windmill (1) is a horizontal shaft type windmill whose windmill shaft (2) extends in a horizontal direction.

## Patentansprüche

1. Windrad (1), das einen Flügelfußteil aufweist, der durch eine unterschnittene Passungsstruktur (6, 12, 14, 20) des Flügelfußteils mit einer Nabe (3, 18) in einer radialen Richtung von einer Windradwelle (2) verbunden ist, **dadurch gekennzeichnet, dass**
ein Teil (5) von der unterschnittenen Passungsstruktur (6, 12, 14, 20) durch eine Pressplatte (11, 21) an einer Positionierungsoberfläche (7a) von der Nabe (3, 18) in einer axialen Richtung von der Windradwelle (2) befestigt ist.

2. Windrad (1) nach Anspruch 1, wobei in Bezug auf Abschnitte in einer Richtung rechtwinklig zur radialen Richtung von der Windradwelle (2) in dem Flügelfußteil, der die unterschnitte Passungsstruktur (6, 12, 14, 20) bildet, ein Abschnitt, der eine Schnittfläche in einem Bereich des 1,1- bis 2,0-Fachen von einer minimalen Schnittfläche aufweist, an einer Position näher zu der Windradwelle (2) angeordnet ist als ein Abschnitt, der die minimale Schnittfläche aufweist.

3. Windrad (1) nach Anspruch 1 oder 2, wobei ein Abstand zwischen der Nabe (3, 18) und dem Flügelfußteil in der unterschnitten Befestigungs-struktur (6, 12, 14, 20) in einem Bereich von 0 bis 0,5 mm liegt.

4. Windrad (1) nach Anspruch 1, wobei mindestens eine der Oberflächen für die Befestigung von der Positionierungsoberfläche (7a) und der Pressplatte (11, 21) als eine Oberfläche ausgebildet ist, die zu der axialen Richtung von der Windradwelle (2) rechtwinklig verläuft.

5. Windrad (1) nach einem der Ansprüche 1 bis 4, wobei die unterschnittene Passungsstruktur (6, 12, 14, 20) auf jeder der Oberflächen zur Befestigung von der Positionierungsoberfläche (7a) und der Pressplatte (11, 21) ausgebildet ist.

6. Windrad (1) nach einem der Ansprüche 1 bis 5, wobei die Nabe (3, 18) und der Flügelfußteil an einer flachen Oberfläche oder an einer Oberfläche, die einen Krümmungsradius innerhalb eines Bereichs von 5 bis 100 mm aufweist, miteinander in Kontakt kommen, und zwar in einem Teil (5) von der unterschnittenen Passungsstruktur (6, 12, 14, 20), der einen Teil von der Positionierungsoberfläche (7a) von der Nabe (3, 18) bildet.

7. Windrad (1) nach einem der Ansprüche 1 bis 6, wobei eine Vielzahl von Flügelfußteilen mit einer einzigen Nabe (3, 18) verbunden sind.

8. Windrad (1) nach einem der Ansprüche 1 bis 7, wobei eine Vielzahl von Flügelfußteilen mit der Nabe (3, 18) verbunden sind, so dass sie in einem gleichmäßigen Abstandswinkel in einer Umfangsrichtung um eine Drehachse von der Windradwelle (2) angeordnet sind.

9. Windrad (1) nach einem der Ansprüche 1 bis 8, wobei eine Pressplatte (11, 21) gleichzeitig die unterschnitten Passungsstrukturteile (5) von einer Vielzahl von Flügeln fixiert.

10. Windrad (1) nach einem der Ansprüche 1 bis 9, wobei ein Flügelkörperteil, der einen Teil von dem Flügelfußteil bildet, hergestellt wird, wobei ein faserverstärkter Kunststoff verwendet wird.

11. Windrad (1) nach Anspruch 10, wobei der faserverstärkte Kunststoff einen kohlefaserverstärkten Kunststoff umfasst.

12. Windrad (1) nach Anspruch 10 oder 11, wobei eine scheinbare Dichte von dem Flügelkörperteil in einem Bereich von 0,2 bis 1,0 g/cm³ liegt.

13. Windrad (1) nach einem der Ansprüche 10 bis 12, wobei ein Teil von dem Flügelkörperteil, der in einem Teil (5) von der unterschnittenen Passungsstruktur (6, 12, 14, 20), die an dem Flügelfußteil ausgebildet ist, angeordnet ist, mit einem Metallrahmenmaterial überzogen ist.

14. Windrad (1) nach Anspruch 13, wobei das Metallrahmenmaterial ein Aluminiumrahmenmaterial (8) ist.

15. Windrad (1) nach Anspruch 13 oder 14, wobei der Flügelkörperteil und das Metallrahmenmaterial, die den Teil (5) von der unterschnittenen Passungsstruktur (6, 12, 14, 20) bilden, durch einen Klebstoff verbunden sind.

16. Windrad (1) nach Anspruch 15, wobei eine Dicke von einer Schicht von dem Klebstoff zwischen dem Flügelkörperteil und dem Metallrahmenmaterial, die den Teil (5) von der unterschnittenen Befestigungs-struktur (6, 12, 14, 20) bilden, in einem Bereich von 0,05 bis 0,5 mm liegt.

17. Windrad (1) nach einem der Ansprüche 13 bis 16, wobei der Flügelkörperteil und das Metallrahmenmaterial, die den Teil (5) von der unterschnittenen Passungsstruktur (6, 12, 14, 20) bilden, durch die unterschnittene Passungsstruktur (6, 12, 14, 20) miteinander verbunden sind.

18. Windrad (1) nach einem der Ansprüche 13 bis 17, wobei das Metallrahmenmaterial in eine Vielzahl von Teilen unterteilt ist.

19. Windrad (1) nach einem der Ansprüche 13 bis 18, wobei die unterschnittene Passungsstruktur (6, 12, 14, 20) über einen Kontakt zwischen der Nabe (3, 18) und dem Metallrahmenmaterial ausgebildet ist.

20. Windrad (1) nach einem der Ansprüche 1 bis 19, wobei ein Band (31, 32), das eine Flexibilität aufweist, um eine Verschiebung von einem Flügel (4) in Bezug auf die Nabe (3, 18) zu beschränken, wenn die Befestigung des Flügels (4) an der Nabe (3, 18) gelöst wird, an einem Verbindungsteil von dem Flügelfußteil mit der Nabe (3, 18) bereitgestellt ist.

21. Windrad (1) nach Anspruch 20, wobei die Zugfestigkeit von dem Band (31, 32) in einem Bereich von 1,5 bis 5,0 GPa liegt und eine Zugbruchdehnung von dem Band (31, 32) in einem Bereich von 3 bis 15 % liegt.

22. Windrad (1) nach Anspruch 20 oder 21, wobei eine Zugbelastung, die in dem Band (31, 32) erzeugt wird, 1 % oder weniger von einer Zugfestigkeit von dem Band (31, 32) beträgt, wenn das Windrad (1) in einem Nennverwendungsbereich arbeitet.

23. Windrad (1) nach einem der Ansprüche 20 bis 22, wobei ein Teil von dem Band (31, 32) in einem Teil von dem Flügelfußteil platziert ist.

24. Windrad (1) nach einem der Ansprüche 20 bis 23, wobei das Band (31, 32) mindestens eines aus Glasfasern, Aramidfasern und Stahldrahtmaterial umfasst.

25. Windrad (1) nach einem der Ansprüche 20 bis 24, wobei eine Vielzahl von Flügeln (4) in der Verschiebung beschränkt sind, indem im Wesentlichen ein einziges Band (31, 32) verwendet wird.

26. Windrad (1) nach einem der Ansprüche 1 bis 25, wobei das Windrad (1) ein Windrad des horizontalen Wellentyps ist, dessen Windradwelle (2) sich in einer horizontalen Richtung erstreckt.

## Revendications

1. Éolienne (1) présentant une partie emplanture de pale connectée à un moyeu (3, 18) dans une direction radiale d'un arbre d'éolienne (2), par une structure de raccord en creux (6, 12, 14, 20) de la partie emplanture de pale, **caractérisée en ce que** :
une partie (5) de ladite structure de raccord en creux (6, 12, 14, 20) est fixée sur une surface de positionnement (7a) dudit moyeu (3, 18) dans une direction axiale dudit arbre d'éolienne (2) par une plaque de pression (11,21).

2. Éolienne (1) selon la revendication 1, dans laquelle, par rapport à des sections dans une direction perpendiculaire à ladite radiale direction dudit arbre d'éolienne (2) dans ladite partie emplanture de pale qui forme ladite structure de raccord en creux (6, 12, 14, 20), une section qui présente une surface en coupe qui se situe dans une plage comprise entre 1,1 fois et 2,0 fois la surface en coupe minimum, est disposée au niveau d'une position plus proche dudit arbre d'éolienne (2) qu'une section qui présente ladite surface en coupe minimum.

3. Éolienne (1) selon la revendication 1 ou la revendication 2, dans laquelle un espace entre ledit moyeu (3, 18) et ladite partie emplanture de pale dans ladite structure de raccord en creux (6, 12, 14, 20), se situe dans une plage comprise entre 0 mm et 0,5 mm.

4. Éolienne (1) selon la revendication 1, dans laquelle l'une au moins des surfaces destinées à fixer ladite surface de positionnement (7a) et ladite plaque de pression (11, 21), est formée en tant que surface perpendiculaire à ladite direction axiale dudit arbre d'éolienne (2).

5. Éolienne (1) selon l'une quelconque des revendications 1 à 4, dans laquelle ladite structure de raccord en creux (6, 12, 14, 20) est formée sur chacune des surfaces destinées à fixer ladite surface de positionnement (7a) et ladite plaque de pression (11, 21).

6. Éolienne (1) selon l'une quelconque des revendications 1 à 5, dans laquelle ledit moyeu (3, 18) et ladite partie emplanture de pale entrent en contact l'un avec l'autre au niveau d'une surface plate ou d'une surface qui présente un rayon de courbure qui se situe dans une plage comprise entre 5 mm et 100 mm dans une partie (5) de ladite structure de raccord en creux (6, 12, 14, 20) qui forme une partie de ladite surface de positionnement (7a) dudit moyeu (3, 18).

7. Éolienne (1) selon l'une quelconque des revendications 1 à 6, dans laquelle une pluralité de parties emplantures de pales sont connectées à un seul moyeu (3, 18).

8. Éolienne (1) selon l'une quelconque des revendications 1 à 7, dans laquelle une pluralité de parties emplantures de pales sont connectées audit moyeu (3, 18) de façon à être disposées régulièrement de manière angulaire dans une direction circonférentielle autour de l'axe de rotation dudit arbre d'éolienne (2).

9. Éolienne (1) selon l'une quelconque des revendications 1 à 8, dans laquelle une plaque de pression (11, 21) fixe de manière simultanée les parties structures de raccord en creux (5) d'une pluralité de pales.

10. Éolienne (1) selon l'une quelconque des revendications 1 à 9, dans laquelle une partie corps de pale qui fait partie de ladite partie emplanture de pale, est formée en utilisant une matière plastique renforcée par fibres.

11. Éolienne (1) selon la revendication 10, dans laquelle ladite matière plastique renforcée par fibres comprend une matière plastique renforcée par fibres de carbone.

12. Éolienne (1) selon la revendication 10 ou la revendication 11, dans laquelle la densité brute de ladite partie corps de pale, se situe dans une plage comprise entre 0,2 g / cm ³ et 1,0 g / cm ³.

13. Éolienne (1) selon l'une quelconque des revendications 10 à 12, dans laquelle une partie de ladite partie corps de pale positionnée dans une partie (5) de ladite structure de raccord en creux (6, 12, 14, 20) formée sur ladite partie emplanture de pale, est recouverte d'un matériau de cadre métallique.

14. Éolienne (1) selon la revendication 13, dans laquelle ledit matériau de cadre métallique est un matériau de cadre en aluminium (8).

15. Éolienne (1) selon la revendication 13 ou la revendication 14, dans laquelle ladite partie corps de pale et ledit matériau de cadre métallique qui forme ladite partie (5) de ladite structure de raccord en creux (6, 12, 14, 20), sont collés par un adhésif.

16. Éolienne (1) selon la revendication 15, dans laquelle l'épaisseur de la couche dudit adhésif entre ladite partie corps de pale et ledit matériau de cadre métallique qui forme ladite partie (5) de ladite structure de raccord en creux (6, 12, 14, 20), se situe dans une plage comprise entre 0,05 mm et 0,5 mm.

17. Éolienne (1) selon l'une quelconque des revendications 13 à 16, dans laquelle ladite partie corps de pale et ledit matériau de cadre métallique qui forme ladite partie (5) de ladite structure de raccord en creux (6, 12, 14, 20), sont connectés l'une à l'autre par ladite structure de raccord en creux (6, 12, 14, 20).

18. Éolienne (1) selon l'une quelconque des revendications 13 à 17, dans laquelle ledit matériau de cadre métallique est divisé en une pluralité de parties.

19. Éolienne (1) selon l'une quelconque des revendications 13 à 18, dans laquelle ladite structure de raccord en creux (6, 12, 14, 20) est formée par l'intermédiaire d'un contact entre ledit moyeu (3, 18) et ledit matériau de cadre métallique.

20. Éolienne (1) selon l'une quelconque des revendications 1 à 19, dans laquelle une bande (31, 32) qui présente une souplesse destinée à limiter le déplacement d'une pale (4) par rapport audit moyeu (3, 18) lorsque la fixation de ladite pale (4) sur ledit moyeu (3, 18) est libérée, est prévue au niveau d'une partie connexion de ladite partie emplanture de pale sur ledit moyeu (3, 18).

21. Éolienne (1) selon la revendication 20, dans laquelle la résistance à la traction de ladite bande (31, 32) se situe dans une plage comprise entre 1,5 GPa et 5,0 GPa, et la résistance à la rupture à la traction de ladite bande (31, 32) se situe dans une plage comprise entre 3 % et 15 %.

22. Éolienne (1) selon la revendication 20 ou la revendication 21, dans laquelle la tension de traction générée dans ladite bande (31, 32) est égale ou inférieure à 1 % de la résistance à la traction de ladite bande (31, 32) lorsque ladite éolienne (1) fonctionne dans sa plage de fonctionnement nominale.

23. Éolienne (1) selon l'une quelconque des revendications 20 à 22, dans laquelle une partie de ladite bande (31, 32) est placée dans une partie de ladite partie emplanture de pale.

24. Éolienne (1) selon l'une quelconque des revendications 20 à 23, dans laquelle ladite bande (31, 32) comprend au moins une sorte de fibres de verre, de fibres d'aramide et un matériau de fil d'acier.

25. Éolienne (1) selon l'une quelconque des revendications 20 à 24, dans laquelle une pluralité de pales voient leurs déplacements limités en utilisant sensiblement une seule bande (31, 32).

26. Éolienne (1) selon l'une quelconque des revendications 1 à 25, dans laquelle ladite éolienne (1) est une éolienne du type à arbre horizontal dont l'arbre d'éolienne (2) s'étend dans une direction horizontale.
